Europäisches Patentamt

(19) European Patent Office

Office européen des brevets

(11) Numéro de publication: **0 261 012**
**B1**

(12) **FASCICULE DE BREVET EUROPEEN**

(45) Date de publication du fascicule du brevet:
**15.11.89**

(21) Numéro de dépôt: **87401952.4**

(22) Date de dépôt: **01.09.87**

(51) Int. Cl.⁴: **B62B 3/00**

(54) Enceinte de rangement et/ou de transport d'objets ou produits divers.

(30) Priorité: **09.09.86  FR 8612601**

(43) Date de publication de la demande:
**23.03.88 Bulletin 88/12**

(45) Mention de la délivrance du brevet:
**15.11.89 Bulletin 89/46**

(84) Etats contractants désignés:
**BE DE FR GB IT LU NL**

(56) Documents cités:
**FR-A- 2 305 334**
**US-A- 2 738 201**
**US-A- 3 861 768**
**US-A- 3 981 510**

(73) Titulaire: **ATELIERS REUNIS CADDIE, 13, rue de la Mairie, F-67300 Schiltigheim(FR)**

(72) Inventeur: **Le Marchand, Alain, 13, rue des Primevères, F-67460 Souffelweyersheim(FR)**
Inventeur: **Gillot, Raymond, Résidence Mansart Avenue du Général de Gaulle, F-67800 Bischheim(FR)**

(74) Mandataire: **Tony-Durand, Serge, Cabinet Tony-Durand 77, rue Boissière, F-75116 Paris(FR)**

## Description

La présente invention concerne les enceintes de rangement et/ou de transport d'objets ou produits divers, dans lesquelles il est prévu plusiers étagères superposées.

De telles enceintes de rangement et/ou de transport peuvent être utilisées pour un grand nombre d'applications différentes. Ainsi pour transporter des viandes de boucherie, il est courant d'utiliser des enceintes de transport montées sur des roulettes pour pouvoir être aisément déplacées à la façon d'un chariot et dont les parois sont constituées par des grilles en fils métalliques permettant l'aération et la réfrigération du contenu. Cependant, il est actuellement prévu deux types différents d'enceintes de ce genre qui sont adaptés respectivement au cas des morceaux de viande découpée et au cas des longes de viande de longueur relativement importante. Les enceintes prévues pour le premier cas comportent une série d'étagères superposées destinées à recevoir des morceaux de viande découpée ou des barquettes de conditionnement portant de tels morceaux. Quant aux enceintes adaptées au second cas, elles comportent une seule étagère disposée à la partie supérieure et sous laquelle il est prévu une série de crocs permettant d'y suspendre des longes de porcs, des demi-agneaux, etc.

Cette solution a donc l'inconvénient d'imposer aux utilisateurs de posséder deux séries distinctes d'enceintes de transport qui ne peuvent convenir chacune que pour une application déterminée.

Or, ce même problème se retrouve dans de nombreuses autres applications, notamment pour le transport de linge et de vêtements, puisque dans certains cas il est nécessaire de disposer d'un espace important dans le sens de la hauteur pour pouvoir suspendre des vêtements et que dans d'autres cas il convient de disposer d'une série d'étagères pour ranger à plat d'autres types de vêtements.

Pour certaines autres applications il existe des chariots conçus pour pouvoir être emboîtés les uns dans les autres lorsqu'ils sont vides, et qui comportent des étagères repliables pouvant être escamotés lors de l'emboîtement de tels chariots. Ainsi le brevet US N° 3.981.510, qui correspond au préambule de la revendication 1, décrit un chariot emboîtable comportant deux parois latérales articulées sur les bords verticaux d'une paroi verticale de fond portant des étagères repliables constituées chacune par deux volets articulés l'un à la suite de l'autre et dont l'un s'articule sur cette paroi de fond. En position d'utilisation ces étagères reposent sur des éléments horizontaux de soutien prévus sur la face interne des parois latérales.

Cependant ces étagères sont conçues pour être repliées contre la paroi verticale de fond lorsque les parois latérales sont écartées pour placer le chariot dans sa position d'emboîtement avec un autre chariot similaire. Mais la conception prévue serait difficilement transposable à un chariot classique dont les parois latérales ne seraient écartables, car alors les manoeuvres de repliement et de déploiement des étagères seraient peu aisées.

C'est pourquoi la présente invention a pour objet une enceinte de rangement et/ou de transport dont les parois latérales ne sont pas écartables et qui comporte des étagères repliables dont la conception est telle que les manoeuvres de repliement et de déploiement de celles-ci puissent être aisément réalisées.

Cette enceinte de rangement et/ou de transport comporte des étagères repliables superposées constituées par plusieurs volets articulés dont l'un s'articule sur le fond vertical de cette enceinte pour que l'ensemble puisse être replié contre ce fond, et elle est caractérisée en ce que chaque étagère repliable est constituée par au moins trois volets articulés les uns à la suite des autres, qui reposent sur des glissières horizontales de soutien prévues contre les parois latérales de cette enceinte, mais avec un espacement par rapport à celles-ci, ces parois latérales comportant également des languettes élastiques aptes à servir de cliquets de retenue pour les volets articulés de ces étagères repliables lorsqu'ils sont repliés contre le fond vertical de cette enceinte.

Ainsi l'escamotage des étagères peut s'effectuer très aisément par repliement de celles-ci et coulissement sur les glissières de soutien jusqu'à ce qu'elles soient appliquées contre la paroi de fond et enclenchées derrière les languettes élastiques assurant leur immobilisation en place.

Selon une autre caractéristique, chaque glissière est constituée par un fil métallique dont seules les extrémités sont fixées sur les montants de la paroi latérale correspondante, ce fil étant soutenu en deux points intermédiaires de sa longueur par un élément de soutien disposé au dessous et consistant en un fil métallique en forme générale de U dont la branche médiane est soudée contre la paroi latérale correspondante, cependant que ses branches latérales font saillie vers l'intérieur et sont coudées vers le haut à leurs extrémités pour être soudées sur la glissière correspondante.

D'autres particularités et avantages de l'enceinte de rangement et de transport selon l'invention apparaitront au cours de la description suivante qui est relative à une enceinte plus spécialement conçue pour le transport de pièces de viande. Cette description est donnée en référence au dessin annexé à simple titre indicatif, et sur lequel :

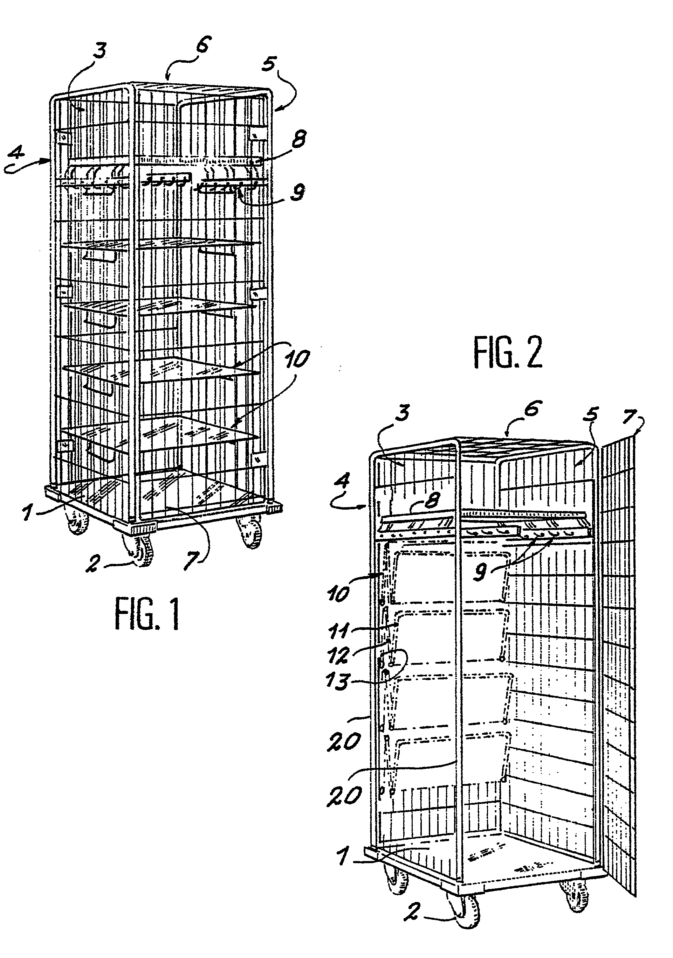

Les figures 1 et 2 sont des vues en perspective représentant cette enceinte respectivement dans l'une et l'autre de ses deux formes possibles d'utilisation.

Les figures 3 et 4 sont des vues en perspective illustrant le mode de repliage des étagères escamotables prévues dans cette enceinte.

La figure 5 est une vue en perspective représentant l'escamotage complet d'une telle étagère.

La figure 6 est une vue partielle en coupe horizontale selon la ligne VI-VI de la figure 5.

La figure 7 est une vue partielle en coupe verticale selon la ligne VII-VII de la figure 6.

L'enceinte représentée comporte un plateau inférieur 1 monté sur des roulettes 2. Ce plateau porte trois parois verticale 3, 4 et 5 constituées par des grilles métalliques et qui forment respectivement le fond vertical de la présente enceinte et ses deux parois latérales. A sa partie supérieure cette enceinte est fermée par une grille métallique horizontale 6 qui constitue en quelque sorte son plafond. Enfin, il est prévu une porte 7, également en *grille métallique*, qui s'articule sur le bord avant de l'une des parois latérales.

A sa partie supérieure la présente enceinte renferme une étagère fixe 8 portant, sous sa face inférieure, une série de crocs 9 permettant d'y suspendre des longes de viande de longueur relativement importante.

Au-dessous de cette étagère fixe, il est prévu une série d'étagères horizontales 10 qui sont susceptibles d'être escamotées. A cet effet, chacune de ces étagères est constituée par trois volets 11, 12 et 13 articulés les uns à la suite des autres, le volet arrière 13 étant lui-même articulé sur l'un des longerons 14 du fond vertical 3. Chacun de ces volets peut être constitué par une plaque métallique rapportée sur un cadre 15 en fil métallique. L'articulation de ces volets les uns sur les autres, ainsi que sur le fond arrière 3, s'effectue par l'intermédiaire d'anneaux de jonction 16.

Ces étagères reposent sur des glissières horizontales 17. Chacune de ces glissières est constituée par un fil métallique horizontal s'étendant parallèlement à l'une ou l'autre des parois latérales 4 et 5, à une distance *e* de la face interne de cette paroi. Cet écartement est prévu de façon que le fil correspondant puisse servir de glissière de glissement pour les volets 11, 12 et 13 de chaque étagère sans que les bords de ceux-ci risquent de s'accrocher sur les parois latérales. Pour que les fils 17 formant glissières soient fixés à l'écartement voulu *e* par rapport aux parois latérales ils sont simplement soudés à leurs extrémités sur les montants verticaux 20 des coins de l'enceinte, leurs extrémités 17a étant convenablement coudées. Cependant ils sont également soutenus en des points intermédiaires de leur longueur par des éléments de soutien 18 de conception particulière, et ce de façon à pouvoir supporter les charges placées sur les ètagères. Chacun de ces éléments 18 est constitué par un fil métallique en forme générale de U dont la branche médiane 18a est disposée horizontalement et soudée sur les fils verticaux 4a ou 5a de la paroi latérale correspondante 4 ou 5. Les branches latérales 18b de ce fil sont dirigées horizontalement vers l'intérieur de l'enceinte et leurs extrémités 18c sont coudées vers le haut pour être soudées en des points intermédiaires de la longueur des fils 17 formant glissières. Ainsi les éléments de soutien 18 font saillie dans l'espace disponible entre deux étagères superposées.

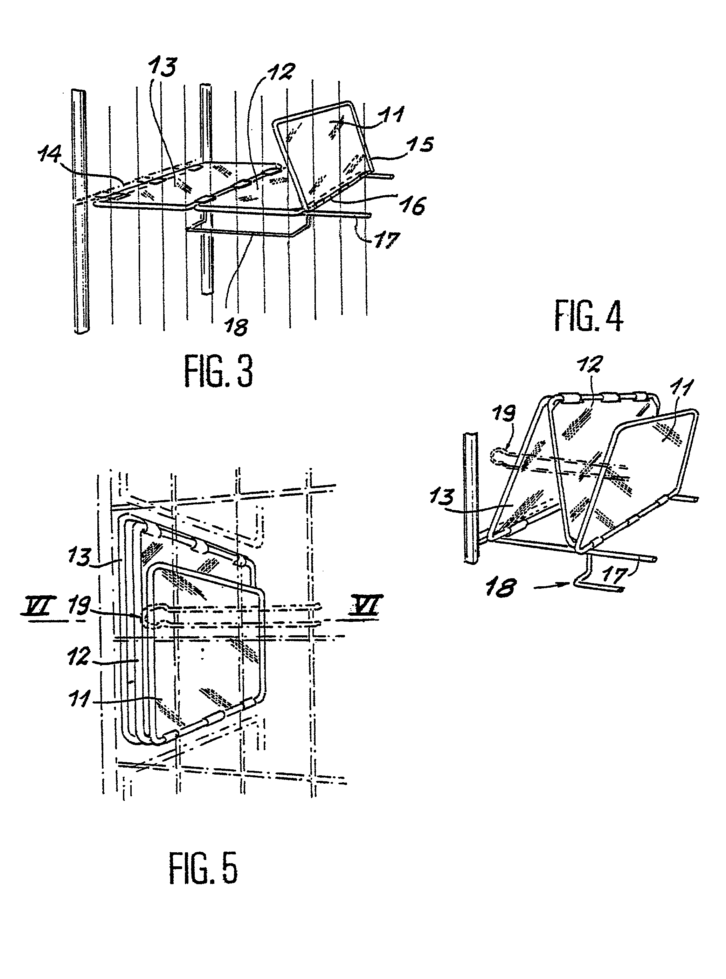

Dans ces conditions, pour permettre la disposition d'un nombre maximum d'étagères à l'intérieur de la présente enceinte, le premier volet 11 de chacune d'elles, c'est-à-dire le volet disposé vers l'avant, présente une largeur plus faible que les deux autres volets. Ceci permet le repliage de ces volets comme représenté sur les figures 3 et 4, sans que le volet avant 11 risque de buter contre les parties saillantes des éléments de soutien 18 des glissières 17 situées au-dessus. D'autre part, ces éléments de soutien, qui empiètent à l'intérieur de l'espace disponible entre deux étagères, interdisent tout pliage de celles-ci de façon différente à celle représentée sur la figure 4.

Ce mode de pliage, consistant à relever le volet avant 11 et à replier ensuite l'ensemble en accordéon, permet de faire glisser ces volets sur les glissières horizontales 17 jusqu'à ce que ces volets soient appliqués verticalement les uns contre les autres et contre la paroi de fond 3.

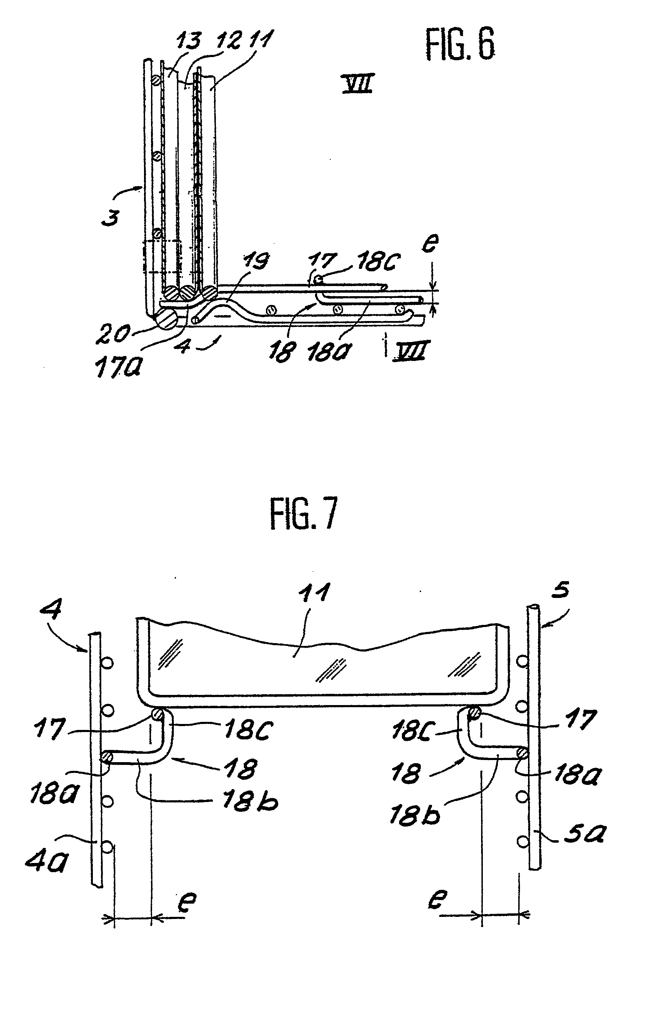

Or les parois latérales 4 et 5 comportent, dans leur partie arrière, des languettes élastiques 19 faisant saillie vers l'intérieur et qui sont aptes à servir de cliquets de retenue pour les étagères 10 lorsque celles-ci sont complètement repliées contre le fond vertical 3 de l'enceinte. Chacune de ces languettes d'accrochage est constituée par une épingle en fil métallique qui est fixée par soudure sur les montants des grilles constituant les parois latérales 4 ou 5, et dont l'extrémité arrière est coudée vers l'intérieur pour constituer un cliquet de retenue, comme représenté sur la figure 6.

Lorsque la présente enceinte de transport doit être utilisée pour le transport de longes de viande, il suffit de replier toutes les étagères 10 pour les escamoter de façon à dégager complètement l'espace précédemment occupé par celles-ci, après quoi il est possible d'accrocher des longes de viande sur les crocs 9 prévus à cet effet. Le repliage des étagères 10 est très facile à réaliser puisqu'il suffit de replier celles-ci en accordéon, comme représenté sur les figures 3 et 4, et de les presser contre le fond 3 de l'enceinte pour que chaque étagère repliée vienne se placer au-delà des cliquets de retenue 19. Ces étagères sont alors parfaitement immobilisées et ne risquent pas de retomber de façon intempestive, sous l'effet de chocs ou de trépidations.

Cependant lorsque cette même enceinte doit être utilisée ensuite pour le transport de morceaux de viande ou similaires, il suffit de tirer en avant les volets constituant chaque étagère escamotable 10 et de les déployer horizontalement dans leur position d'utilisation en les faisant glisser sur les glissières horizontales 17.

Les manoeuvres de déploiement des étagères sont donc aussi faciles à réaliser que les manoeuvres de repliement. Ceci est dû au fait que dans un cas comme dans l'autre, les bords des volets articulés des étagères peuvent glisser sur les glissières 17 prévues à cet effet. Or ce glissement s'effectue très facilement du fait que ces glissières sont espacées des parois latérales voisines, et non pas accolées ou attenantes à ces parois.

Ainsi, la présente enceinte est aisément transformable pour être utilisée indifféremment pour une application ou pour l'autre, ce qui constitue un avantage très important pour les utilisateurs. En effet, ceci supprime la nécessité de disposer de deux séries différentes d'enceintes de transport équipés différeremment.

Bien que l'exemple décrit ci-dessus soit relatif à une enceinte spécialement destinée à transporter des pièces de viande, il est bien évident qui l'enceinte de rangement et/ou de transport selon l'invention peut être utilisée pour de nombreuses autres applications où il est également nécessaire, ou tout au moins avantageux, de pouvoir effectuer une transformation similaire. Ainsi cette enceinte peut être utilisée avec profit pour le transport de vêtements dont certains doivent être suspendus, cependant que d'autres doivent être rangés à plat sur des étagères multiples. Mais encore une fois, de nombreuses autres applications sont possible. Bien entendu la présente enceinte peut alors faire l'objet de certaines modifications et adaptations en fonction des applications particulières prévues.

Du reste il va de soi que cette enceinte peut donner lieu à de nombreuses autres modifications et variantes. Ainsi, les languettes d'accrochage 19 peuvent être remplacées par tout autre organe approprié susceptible d'assurer la retenue en place des étagères 10 dans leur position d'escamotage. Par ailleurs, ces étagères peuvent être réalisées de façon différente de celles prévues dans l'exemple de réalisation décrit précédemment. Il en est de même en ce qui concerne les articulations existant entre les différents volets constituant ces étagères.

## Revendications

1. Enceinte de rangement et/ou de transport d'objets ou produits divers, comportant des étagères repliables superposées constituées par plusieurs volets articulés dont l'un s'articule sur le fond vertical de cette enceinte pour que l'ensemble puisse être replié contre ce fond, caractérisée en ce que chaque étagère repliable est constituée par au moins trois volets (11, 12, 13) articulés les uns à la suite des autres, qui reposent sur des glissières horizontales de soutien (17) prévues contre les parois latérales (4, 5) de cette enceinte, mais avec un espacement par rapport à celles-ci, ces parois latérales comportant également des languettes élastiques (19) aptes à servir de cliquets de retenue pour les volets articulés de ces étagères repliables lorsqu'ils sont repliés contre le fond vertical (3) de cette enceinte.

2. Enceinte de rangement et/ou de transport selon la revendication 1, caractérisée en ce que chaque glissière (17) est constituée par un fil métallique dont seules les extrémités sont fixées sur les montants (20) de la paroi latérale correspondante (4 ou 5), ce fil étant soutenu en deux points intermédiaires de sa longueur par un élément de soutien (18) disposé au dessous et consistant en un fil métallique en forme générale de U dont la branche médiane (18a) est soudée horizontalement contre la paroi latérale correspondante, cependant que ses branches latérales (18b) font saillie vers l'intérieur et sont coudées vers le haut à leurs extrémités (18c) pour être soudés sur la glissière (17) correspondante.

3. Enceinte de rangement et/ou de transport selon la revendication 2, caractérisé en ce que dans le but de permettre un resserrement maximum des étagères repliables (10) malgré la présence des éléments de soutien (18) faisant saillie dans l'espace disponible entre deux étagères, le volet avant (11) de chacune d'elles présente une largeur plus faible que celle des autres volets.

4. Enceinte de rangement et/ou de transport selon l'une des revendications précédentes, caractérisé en ce que chaque languette élastique (19) de retenue d'une étagère repliable (10), dans sa position d'escamotage, est constituée par une épingle en fil métallique dont les branches sont fixées par soudure sur la paroi latérale correspondante (4 ou 5), cependant que son extrémité libre est coudée vers l'intérieur pour constituer un cliquet de retenue.

## Claims

1. Enclosure for storage and/or transport of objects or various products, comprising superposed folding shelves constituted by a plurality of hinged flaps, one of which is hinged on the vertical end-wall of said enclosure so that the entire shelf can be folded-back against said end-wall, characterized in that each folding shelf is constituted by at least three flaps (11, 12, 13) which are hinged on each other in succession and rest on horizontal supporting guides (17) mounted against the side walls (4, 5) of said enclosure but in spaced relation to these latter, said side walls being also provided with resilient tongues (19) which are capable of serving as catches for retaining the hinged flaps of said folding shelves when they are folded-back against the vertical end-wall (3) of said enclosure.

2. Storage and/or transport enclosure in accordance with claim 1, characterized in that each guide (17) is constituted by a wire, only the ends of which are fixed on the upright members (20) of the corresponding side wall (4 or 5), said wire being supported at two intermediate points of its length by a supporting element (18) placed beneath and consisting of a wire having the general shape of a U, the median leg (18a) of which is welded horizontally against the corresponding side wall whilst its lateral legs (18b) project inwards and are upwardly elbowed at their ends (18c) in order to be welded to the corresponding guide (17).

3. Storage and/or transport enclosure in accordance with claim 2, characterized in that, with a view to permitting maximum closure of the folding shelves (10) in spite of the presence of the supporting elements (18) which project into the available space between two shelves, the front flap (11) of each shelf has a smaller width than that of the other flaps.

4. Storage and/or transport enclosure in accordance with one of the preceding claims, characterized in that each resilient tongue (19) for retaining a folding shelf (10) in its retracted position is constituted by a wire hairpin, the arms of which are fixed by welding on the corresponding side wall (4 or 5) whilst its free end is inwardly elbowed in order to constitute a retaining catch.

## Patentansprüche

1. Ordnungs- oder Transportvorrichtung für Gegenstände oder verschiedene Produkte, mit über-

einander angeordnete, zurückklappbaren Böden, die aus mehreren schwenkbaren Klappen bestehen, von denen eine um die vertikale Rückwand der Vorrichtung derart schwenkbar ist, daß der gesamte Boden gegen die Rückwand zurückgefaltet werden kann, dadurch gekennzeichnet, daß jeder zurückklappbare Boden mindestens drei miteinander schwenkbar verbundene Klappen (11, 12, 13) aufweist, die auf horizontalen, an den Seitenwanden (4, 5) der Vorrichtung angeordneten Stütz- und Führungsbahnen (17) aufgelagert sind, die mit Abstand zu den Seitenwänden vorgesehen ist, daß die Seitenwände mit elastischen Zungen (19) versehen sind, die Rückhalteklinken für die schwenkbaren Klappen der zusammengeklappten Böden in der gegen die Rückwand (3) der Vorrichtung zurückgeklappten Stellung bilden.

2. Ordnungs- oder Transportvorrichtung nach Anspruch 1, dadurch gekennzeichnet, daß jede Stütz- und Führungsbahn 817) aus einem Metalldrahtabschnitt besteht, dessen Enden mit den Säulen (20) der betreffenden Seitenwand (4 oder 5) verbunden sind und der an zwei Punkten seiner Langserstreckung durch ein Stützelement (18) abgestützt ist, welches unter ihm angeordnet ist und aus einem Stück Metalldraht in U-Form besteht, dessen Mittelteil (18a) horizontal an der betreffenden Seitenwand angeschweißt ist und an dessen Schenkel (18b) nach innen auskragen und im Bereich der Enden (18c) nach oben umgebogen sind, wo sie an der entsprechenden Stütz- und Führungsbahn (17) angeschweißt sind.

3. Ordnungs- oder Transportvorrichtung nach Anspruch 2, dadurch gekennzeichnet, daß zum Zweck der maximalen Zusammenfaltung der zurückklappbaren Böden trotz der Stützelemente (18), die in den Zwischenraum zwischen zwei Böden einragen, die vorderste Klappe (11) eine geringere Länge als die übrigen Klappen aufweist.

4. Ordnungs- oder Transportvorrichtung nach einem der Ansprüche 1 bis 3, dadurch gekennzeichnet, daß jede elastische Zunge (19) für die Verriegelung eines zusammenklappbaren Bodens (10) in der zusammengeklappten Stellung aus einem haarnadelförmig gebogenen Metalldraht besteht, der mit der betreffenden Seitenwand (4 oder 5) durch Anschweißen verbunden ist und dessen freies Ende nach innen gebogen ist und die Rückhalteklinke bildet.

FIG. 1

FIG. 2

FIG. 3

FIG. 4

FIG. 5

FIG. 6

FIG. 7